**Europäisches Patentamt**

**European Patent Office**

**Office européen des brevets**

(19)

(11) Veröffentlichungsnummer: **0 134 983**
**B1**

(12) ## EUROPÄISCHE PATENTSCHRIFT

(45) Veröffentlichungstag der Patentschrift:
**03.06.87**

(21) Anmeldenummer: **84107958.5**

(22) Anmeldetag: **06.07.84**

(51) Int. Cl.⁴: **C 08 G 59/14,** C 08 G 59/40,
C 08 G 18/00, C 09 D 3/58,
C 09 D 5/44

(54) **Stickstoffbasische Gruppen tragendes Kunstharz, dessen Herstellung und Verwendung.**

(30) Priorität: **12.07.83 DE 3325061**

(43) Veröffentlichungstag der Anmeldung:
**27.03.85 Patentblatt 85/13**

(45) Bekanntmachung des Hinweises auf die Patenterteilung:
**03.06.87 Patentblatt 87/23**

(84) Benannte Vertragsstaaten:
**AT BE CH DE FR GB IT LI NL SE**

(56) Entgegenhaltungen:
**EP - A - 0 004 090**
**US - A - 3 291 775**
**US - A - 4 017 438**

(73) Patentinhaber: **BASF Lacke + Farben
Aktiengesellschaft, Max-Winkelmann-Strasse 80,
D-4400 Münster (DE)**

(72) Erfinder: **Schupp, Eberhard, Dr., Tilsiter Weg 4,
D-6830 Schwetzingen (DE)**
Erfinder: **Loch, Werner, Dr., In der Bleiche 2,
D-6701 Erpolzheim (DE)**
Erfinder: **Osterloh, Rolf, Dr., Am Wehrhaus 16,
D-6718 Gruenstadt (DE)**
Erfinder: **Ahlers, Klaas, Dr., Foehrenweg 21,
D-4400 Muenster (DE)**

(74) Vertreter: **Rämisch, Friedrich, Dr. et al, BASF
Aktiengesellschaft Carl-Bosch-Strasse 38,
D-6700 Ludwigshafen (DE)**

ACTORUM AG

### Beschreibung

Die vorliegende Erfindung betrifft stickstoffbasische Gruppen tragende, durch Protonierung mit Säure wasserverdünnbare Kunstharze, deren Herstellung und Verwendung als Überzugsmittel, insbesondere für die kathodische Elektrotauchlackierung.

Umsetzungsprodukte aus Epoxidharzen und Polyaminen sind seit langem bekannt. So werden z.B. in der US-PS 2 772 248 wasserlösliche Epoxidharz-Amin-Addukte aus harzartigen Epoxiden und aliphatischen Polyaminen beschrieben. Diese Produkte müssen vor ihrer Verwendung durch Destillation im Vakuum bei hoher Temperatur von nicht umgesetztem Polyamin befreit werden. In der US-PS 4 139 510 werden Polyepoxide mit einem Überschuss an Polyaminen umgesetzt. Der Überschuss des Amins wird im Vakuum abgezogen und der verbleibende Rückstand mit einem Monoepoxid oder einer Monocarbonsäure umgesetzt. Da in beiden Fällen, um hochverzweigte oder gar gelierte Produkte zu vermeiden, das Polyamin im Überschuss verwendet wird, muss das Amin zeitraubend und aufwendig im Vakuum destilliert werden. Bei höheren Aminen, z.B. solchen mit einem Siedepunkt bei Normaldruck erheblich oberhalb von 200°C, gelingt die Entfernung des Amins nur unvollständig.

Die DE-AS 2 265 195 bezieht sich auf eine wässrige Überzugszusammensetzung eines elektrisch ablagerbaren Kunstharzes, wobei das Kunstharz aus einem Harz mit Epoxidgruppen, einem Polyaminderivat mit latenten primären Aminogruppen, die durch Ketimingruppen verkappt sind, und mit mindestens einer sekundären Aminogruppe und gegebenenfalls einem anderen primären oder sekundären Amin hergestellt worden ist. So hergestellte Kunstharze enthalten primäre Aminogruppen, ohne dass zu ihrer Herstellung überschüssiges Polyamin eingesetzt worden ist. Das Verfahren ist jedoch ungeeignet, Polyamine als Kettenverlängerer in die Epoxidharzkette einzubauen, was zur Elastifizierung von aus diesen Harzen hergestellten Überzügen wünschenswert wäre.

Aufgabe der vorliegenden Erfindung ist es, neue, stickstoffbasische Gruppen tragende Kunstharze aufzuzeigen, die die oben geschilderten Nachteile nicht aufweisen und zur Herstellung besonders elastischer Überzüge geeignet sind.

Gegenstand der vorliegenden Erfindung sind stickstoffbasische Gruppen tragende, durch Protonierung mit Säure wasserverdünnbare Kunstharze, die dadurch gekennzeichnet sind, dass sie durch Reaktion von

(A) mindestens einem Epoxidharz mit einem mittleren Molekulargewicht $\overline{M}_n$ von 300 bis 6000 und im Mittel 1,5 bis 3,0 Epoxidgruppen pro Molekül mit

(B) einem Diketimin eines diprimären Amins
und gegebenenfalls

(C) einem sekundären Amin, das gegebenenfalls zusätzlich eine tertiäre Aminogruppe enthält, einem Ketimin eines primären Monoamins und/oder einem Ketimin eines primär/tertiären Diamins
erhältlich sind.

Die Anzahl der eingesetzten Epoxidäquivalente des Epoxidharzes (A) ist dabei vorzugsweise 50 bis 100% der Summe der eingesetzten Ketimin- und sekundären Amin-Äquivalente der Komponenten (B) und (C).

Gegenstand der vorliegenden Erfindung ist auch ein stickstoffbasische Gruppen tragendes, durch Protonierung mit Säure wasserverdünnbares Kunstharz, das, wie oben beschrieben, erhältlich ist, und dessen Hydroxylgruppen zusätzlich zumindest teilweise mit teilgeblocktem Polyisocyanat zu Urethangruppen umgesetzt sind.

Gegenstand der vorliegenden Erfindung ist ausserdem die Verwendung der erfindungsgemässen, durch Protonierung mit Säure wasserverdünnbaren Kunstharze in Form wässriger Dispersionen; die gegebenenfalls zusätzlich Vernetzter, organische Lösemittel, Pigmente und/oder weitere Hilfsstoffe enthalten, als Überzugsmittel, insbesondere für die kathodische Elektrotauchlackierung elektrisch leitfähiger Substrate.

Gegenstand der vorliegende Erfindung sind auch Überzugsmittel, die als Bindemittel das erfindungsgemäss hergestellte stickstoffbasische Gruppen tragende Kunstharz und zusätzlich einen Vernetzer enthalten.

Desgleichen bezieht sich die vorliegende Erfindung auf mit Lacküberzügen versehene Gegenstände, die durch Aufbringen der erfindungsgemäss hergestellten Kunstharze bzw. Überzugsmittel und Einbrennen erhalten worden sind.

Es war in hohem Masse überraschend, dass Harze durch die Umsetzung eines Polyepoxids mit einem Diketimin hergestellt werden können, d.h. durch Umsetzung von Epoxidgruppen mit Ketimingruppen, da die Lehre der DE-AS 2 265 195 darin besteht, primäre Aminogruppen durch Ketiminbildung von der Reaktion mit Epoxidgruppen zu schützen und dadurch die alleinige Umsetzung sekundärer Aminogruppen mit den Epoxidgruppen zu erzwingen.

Demgegenüber wurde gefunden, dass Ketimine von primären Diaminen, die im Gegensatz zu den gemäss DE-AS 2 265 195 zu verwendenden Polyaminen keine sekundären Aminogruppen tragen, sich mit Epoxidgruppen von Epoxidharzen umsetzen lassen, wobei die Ketimingruppen monofunktionell reagieren, d.h., eine Ketimingruppe setzt sich überwiegend nur mit einer Epoxidgruppe um. Wird zum fertigen Kunstharz Wasser gegeben, so spaltet sich das Keton ab und es entsteht eine sekundäre Aminogruppe. Diketimine von primären Diaminen lassen sich also als Kettenverlängerer und Endgruppen in Epoxidharze einbauen. Durch Variation der Bausteine und Äquivalentverhältnisse lassen sich eine Vielzahl verschiedener Kunstharze mit unterschiedlichen Eigenschaften herstellen.

Zu den Aufbau-Komponenten der erfindungsgemässen Kunstharze und deren Herstellung ist im einzelnen folgendes zu sagen:

(A) Als Epoxidharze (A) können beliebige Materialien verwendet werden, sofern sie ein mittleres Molekulargewicht $\overline{M}_n$ von 300 bis 6000 und im Mittel 1,5 bis 3,0 Epoxidgruppen pro Molekül enthalten, vorzugsweise Verbindungen mit zwei Epoxidgruppen pro Molekül. Bevorzugt sind Epoxidharze mit mittleren Molekulargewichten $\overline{M}_n$ von 350 bis 5000, insbesondere 350 bis 2000. Besonders bevorzugte Epoxidharze sind zum Beispiel Glycidylether von im Mittel mindestens zwei phenolische Hydroxylgruppen pro Molekül enthaltenden Polyphenolen, die sich in üblicher Weise durch Veretherung mit einem Epihalohydrin in Gegenwart von Alkali herstellen lassen. Beispiele für geeignete Phenolverbindungen sind Bis-(4-hydroxylphenyl)-2,2-propan, 4,4'-Dihydroxybenzophenon, Bis-(4-hydroxyphenyl)-1,1-ethan, Bis-(4-hydroxyphenyl)-1,1-isobutan, Bis-(4-hydroxy-tert.-butyl-phenyl)-2,2-propan, Bis-(2-hydroxynaphthylmethan, 1,5-Dihydroxynaphthalin. In manchen Fällen ist es wünschenswert, aromatische Epoxidharze mit höherem Molekulargewicht einzusetzen. Diese werden erhalten, indem man die oben genannten Diglycidylether mit einem Polyphenol, wie beispielsweise Bis-(4-hydroxyphenyl)-2,2-propan reagieren lässt und dann die erhaltenen Produkte mit Epichlorhydrin unter Herstellung von Polyglycidylethern weiter umsetzt.

Eine andere geeignete Klasse von Epoxidharzen sind Polyglycidylether von phenolischen Novolakharzen.

Ebenfalls geeignet sind Polyglycidylether von mehrwertigen Alkoholen, wie Ethylenglykol, Diethylenglykol, Triethylenglykol, 1,2-Propylenglykol, 1,3-Propandiol, 1,5-Pentandiol, 1,2,6-Hexantriol, Glycerin und Bis-(4-hydroxycyclohexyl)-2,2-propan.

Es können auch Polyglycidylester von Polycarbonsäuren verwendet werden.

Unter den erfindungsgemäss bevorzugten Polyglycidylethern von Polyphenolen sind diejenigen mit Epoxidäquivalentgewichten im Bereich von 180 bis 1000 besonders bevorzugt.

Aromatische Polyepoxide mit einem höheren Epoxidäquivalentgewicht können aus solchen mit einem niedrigeren Epoxidäquivalentgewicht und Polyphenolen vor oder während der Umsetzung mit den Komponenten (B) und (C) hergestellt werden.

(B) Als Diketimine primärer Diamine (B) können die Ketimine aus beliebigen Ketonen mit beliebigen primären Diaminen eingesetzt werden. Derartige Ketimine lassen sich leicht aus Ketonen und primären Diaminen unter Entfernung des gebildeten Wassers, z.B. durch azeotrope Destillation, erhalten.

Als primäre Diamine sind beispielsweise solche geeignet, die keine weiteren mit Epoxidgruppen unter milden Bedingungen reaktive Gruppen enthalten. Sie dürfen z.B. keine sekundären Aminogruppen oder Mercaptangruppen enthalten, während alkoholische Hydroxylgruppen aufgrund ihrer Reaktionsträgheit nicht stören. Beispiele geeigneter primärer Diamine sind Ethylendiamin, 1,3-Diaminopropan, 1,4-Diaminobutan, 1,6-Diaminohexan, 4,9-Dioxadodecandiamin-1,12, 4,4'-Diaminodicyclohexylmethan, 9-Aminomethyl-stearylamin. Amine wie 2-(3-Aminopropyl)-cyclohexylamin, deren Aminogruppen eine unterschiedliche Reaktivität aufweisen, sind in manchen Fällen besonders vorteilhaft.

Neben derartigen Polyaminen mit niedrigem definiertem Molekulargewicht sind auch oligomere oder polymere Polyamine mit mittleren Molekulargewichten $\overline{M}_n$ bis zu 3000 einsetzbar. Beispiele solcher Polyamine sind Diamine, die durch reduktive Cyanethylierung von Polyolen, wie Polytetrahydrofuran herstellbar sind. Derartige Produkte enthalten endständige primäre Aminogruppen in Form von Aminopropoxygruppen.

Auch Diamine mit zusätzlichen Amidgruppen, wie sie z.B. durch Kondensation vom primären aliphatischen oder cycloaliphatischen Diaminen mit Dicarbonsäuren, wie Adipinsäure, Sebazinsäure oder dimerer Fettsäure erhalten werden, können erfindungsgemäss verwendet werden. Die oben beschriebenen Amine können allein oder im Gemisch miteinander eingesetzt werden.

Als Ketone sind vor allem solche geeignet, die ausser der Ketogruppe keine weitere gegenüber einer primärer Aminogruppe reaktive Gruppierung enthalten. Beispiele geeigneter Ketone sind Aceton, Methylethylketon, Methylpropylketon, Methylisopropylketon, Methylisobutylketon, Methylisoamylketon, Diethylketon, Dipropylketon, Cyclohexanon. Besonders bevorzugte Ketone sind Aceton, Methylethylketon und Methylisobutylketon.

(C) Als gegebenenfalls mitzuverwendende sekundäre Amine können beliebige nichtaromatische Amine eingesetzt werden, z.B. Dialkylamine wie Dimethylamin, Diethylamin, Dipropylamin oder Dibutylamin. Bevorzugt sind jedoch Alkanolamine, wie z.B. Methylethanolamin, Ethylethanolamin, Diethanolamin, Methylisopropanolamin, Ethylisopropanolamin und Diisopropanolamin. Als sekundäre Amine (C) sind auch solche geeignet, die noch eine zusätzliche tertiäre Aminogruppe aufweisen, wie beispielsweise N,N-Diethyl-N'-isobutyl-propylendiamin-1,3 und N,N-Bis-(2-hydroxyethyl)-N'-isobutyl-propylendiamin-1,3.

Zuweilen kann es zweckmässig sein, als Komponente (C) zusätzlich Ketimine von primären Monoaminen einzusetzen. Vor allem Ketimine langkettiger primärer Monoamine, wie z.B. Octylamin, Laurylamin, Stearylamin oder Amidaminen aus primären Diaminen und Monocarbonsäuren, wie Ethylhexansäure oder höherer Fettsäuren, können zur Plastifizierung der aus den erfindungsgemässen Kunstharzen hergestellten Überzüge verwendet werden.

Schliesslich können auch noch Monoketimine von primär/tertiären Diaminen als Komponente (C) eingesetzt werden. Beispiele hierfür sind die Ketimine des N,N-Diethyl-ethylendiamin und des N,N-Diethyl-propylendiamin-1,3. Diese Amine sind leichter zugänglich als oben genannte sekundär/tertiären Diamine, und über ihre Ketimine können zusätzliche basische Gruppen in die Harze eingebaut werden.

Die Mengenverhältnisse der Komponenten (A), (B) und gegebenenfalls (C) sind in weiten Grenzen variierbar. Für die meisten erfindungsgemässen Anwendungszwecke ist es wünschenswert, epoxidgruppenfreie Kunstharze herzustellen, d.h. die Anzahl der eingesetzten Epoxidäquivalente des Epoxidharzes (A) beträgt vorzugsweise 50 bis 100% der Summe der eingesetzten Ketimin- und sekundären Amin-Äquivalente der Komponenten (B) und (C). Bei Produkten, die keine Komponente (C) enthalten, wird das Molekulargewicht des erfindungsgemässen Kunstharzes durch das Äquivalentverhältnis zwischen Epoxidgruppen und Ketimingruppen reguliert. Die Anzahl der eingesetzten Epoxidäquivalente des Epoxidharzes (A) beträgt dann besonders bevorzugt 50 bis 75% der eingesetzten Ketiminäquivalente der Komponente (B). Wird zusätzlich Komponente (C) eingesetzt, so wird das erreichbare Molekulargewicht zusätzlich durch die Menge an — monofunktioneller — Komponente (C) begrenzt. Dadurch ist es auch möglich, die Summe der eingesetzten Äquivalente (B) und (C) gleich den Äquivalenten an (A) zu wählen.

Die mittleren Molekulargewichte $\overline{M}_n$ der erfindungsgemässen Kunstharze sollten etwa 1000 bis 10.000 betragen, für viele Zwecke, z.B. für die Herstellung von kathophoretisch abscheidbaren wässrigen Lacksystemen, sind mittlere Molekulargewichte $\overline{M}_n$ von 1500 bis etwa 5000 anzustreben.

Die Umsetzung der Komponenten (A), (B) und gegebenenfalls (C) wird zweckmässigerweise in Gegenwart von Lösemitteln, z.B. Kohlenwasserstoffen wie Toluol oder Xylol, Ketonen, wie Methylethylketon oder Methylisobutylketon, Alkoholen wie Ethanol, Butanol, Estern, Ethern oder dergleichen bei Temperaturen von 50°C bis 150°C, vorzugsweise 80°C bis 130°C durchgeführt.

Die erfindungsgemässen Kunstharze enthalten nach der Behandlung mit Wasser Hydroxylgruppen, sekundäre Aminogruppen und zusätzlich primäre und/oder tertiäre Aminogruppen. Sie sind daher einer Vielzahl von Vernetzungsreaktionen zugänglich, was sie nach Zumischung geeigneter Vernetzer zu wertvollen Lackbindemitteln macht.

Geeignete Vernetzer für die erfindungsgemässen Bindemittel sind z.B. Aminoplastharze, wie Harnstoff-Formaldehyd-Harze, Melaminharze oder Benzoguanaminharze, Phenolplastharze, geblockte mehrwertige Isocyanatvernetzer, über Esteraminolyse und/oder Umesterung härtende Vernetzer mit im Mittel mindestens zwei aktivierten Estergruppen pro Molekül, z.B. α-Hydroxyalkylester-Vernetzer gemäss EP 0 040 867 und Carbalkoxymethylester-Vernetzer gemäss der Deutschen Patentanmeldung P 3 233 139.8, Harnstoffkondensationsprodukte, wie sie beispielsweise aus primären Di- und/oder Polyaminen, sekundären Monoaminen und Harnstoff, ggf. unter Mitverwendung eines Polyalkohols, wie beispielsweise Trimethylolpropan, bei erhöhter Temperatur unter Abtrennung des entstehenden Ammoniaks erhalten werden, und α-Hydroxyalkylcarbamat-Vernetzer, wie sie beispielsweise durch Umsetzung polyprimärer Amine mit Ethylencarbonat erhalten werden. Die Mengen an einzusetzenden Vernetzern richten sich nach Art und Anzahl der miteinander reaktiven Gruppen im Kunstharz und Vernetzer und nach dem Grad der erwünschten Vernetzungsdichte. Im allgemeinen werden Kunstharz-Vernetzer-Verhältnisse von 1 : 9 bis 9 : 1, vorzugsweise 1 : 1 bis 9 : 1, insbesondere 1,5 : 1 bis 4 : 1, jeweils bezogen auf das Gewicht, eingesetzt.

Es ist nicht unbedingt nötig, separate Vernetzer zuzusetzen, da Vernetzerfunktionen auch in das erfindungsgemässe Kunstharz eingebaut werden können, so dass es selbstvernetzend wird. Dies kann z.B. erfolgen, indem man nach der Umsetzung von (A), (B) und gegebenenfalls (C) das resultierende Harz mit einem teilgeblockten Polyisocyanat umsetzt, welches im Mittel noch ca. eine freie Isocyanatgruppe im Molekül enthält. Als Verkappungsmittel können dabei z.B. Alkohole, Phenole und Oxime verwendet werden. Eine weitere Möglichkeit, das erfindungsgemässe Kunstharze selbstvernetzend zu modifizieren, besteht in der Einführung von α-Hydroxyalkylcarbamatgruppen. Hierzu wird das Keton aus dem erfindungsgemässen Harz zunächst hydrolytisch abgespalten. Die entstehenden primären Aminogruppen werden dann beispielsweise mit Ethylencarbonat in β-Hydroxyethylcarbamate überführt.

Ausser Vernetzern können weitere Stoffe wie Pigmente, Hilfsmittel, Lösemittel und Härtungskatalysatoren zugesetzt werden. Die so hergestellten Überzugsmittel können durch übliche Methoden wie Spritzen, Tauchen, Giessen und Rakeln auf Substrate wie Holz, Kunststoff oder Metall ausgebracht werden. Die Aushärtung der Überzüge erfolgt je nach Art des Vernetzers bei 120°C bis 210°C während etwa 5 bis 40 Minuten, wobei zur niedrigsten Einbrenntemperatur die längste Einbrennzeit gehört.

Die Aminzahlen der erfindungsgemässen Kunstharze liegen zwischen ca. 50 und 300 mg KOH/g. Sie lassen sich daher, ggf. auch in Abmischung mit den oben genannten Vernetzern, durch vollständige oder teilweise Protonierung der Aminogruppen in wässrige Dispersionen überführen, die sich vorteilhaft für die Elektrotauchlackierung elektrisch leitfähiger Substrate, wie z.B. Metallteilen, eignen. Dazu wird ein Neutralisationsmittel, wie z.B. Ameisensäure, Essigsäure, Milchsäure oder Phosphorsäure, eingerührt und mit Wasser auf die Verarbeitungskonzentration verdünnt.

Für die kathodische Elektrotauchlackierung wird im allgemeinen ein Feststoffgehalt des Elektrotauchbades von 5 bis 30 Gew.-% eingestellt. Die Abscheidung erfolgt üblicherweise bei Temperaturen von 15 bis 40°C, während einer Zeit von 0,5 bis 5 Minuten und bei pH-Werten von 4,0 bis 8,5, vorzugsweise 5,0 bis 7,5, im allgemeinen bei Abscheidespannungen von 50 bis 500 Volt. Der zu beschichtende elektrisch leitende Körper wird dabei als Kathode geschaltet. Der abgeschiedene Film wird bei Temperaturen oberhalb von 120°C ca. 20 Minuten gehärtet.

Die folgenden Beispiele sollen die Erfindung noch näher erläutern, ohne sie zu beschränken.

Die in den Beispielen genannten Teile und Prozente sind Gewichtsteile und Gewichtsprozente.

I. Herstellung der Diketimine der primären Diamine

Komponente B1:
In einem mit einem Wasserauskreiser versehenen Gefäss werden 348 Teile Hexamethylendiamin und 960 Teile Methylisobutylketon unter Auskreisen von Wasser so lange zum Rückfluss erhitzt, bis 108 Teile Wasser abgetrennt sind. Das Produkt hat eine Aminzahl von 267 mg KOH/g und einen Lösemittelgehalt von 30%.

Komponente B2:
In einem mit einem Wasserauskreiser versehenen Gefäss werden 232 Teile Hexamethylendiamin, 290 Teile dimerisierte Fettsäure und 40 Teile Xylol auf 190°C erhitzt und eine Stunde bei dieser Temperatur gehalten, wobei 29 Teile einer wässrigen Phase abgetrennt werden. Eine Aminbestimmung ergibt, dass die Phase aus 18 Teilen Wasser und 11 Teilen Hexamethylendiamin besteht. Dem Ansatz werden 11 Teile Hexamethylendiamin und 621 Teile Methylisobutylketon zugesetzt und unter Rückfluss 54 Teile Wasser ausgekreist. Das Produkt hat eine Aminzahl von 155 mg KOH/g und enthält 30% Lösemittel.

Komponente B3:

Aus 387 Teilen Hexamethylendiamins, 580 Teilen dimerer Fettsäure und 97 Teilen Leinölfettsäure werden mit 80 Teilen Xylol innerhalb von 2 Stunden bei 190°C 48 Teile einer wässrigen Phase abgetrennt.

Zu 696 Teilen des verbleibenden Kondensats werden 552 Teile Methylisobutylketon zugeführt und 44 Teile Wasser ausgekreist. Das Produkt hat eine Aminzahl von 122 mg KOH/g und einen Lösemittelgehalt von 30%.

II. Herstellung der erfindungsgemässen stickstoffbasische Gruppen tragenden Kunstharze

*Beispiel 1*

Aus 217 Teilen eines Diglycidylethers aus Bis-(4-hydroxyphenyl)-2,2-propan und Epichlorhydrin mit einem Epoxidäquivalentgewicht von 190 und 60 Teilen Toluol werden durch Auskreisen die enthaltenen Spuren von Wasser entfernt. Anschliessend werden 285,7 Teile der Komponente B1 zugefügt und 20 Stunden bei 120°C gehalten. Nach kurzer Zeitz können keine Epoxidgruppen mehr nachgewiesen werden. Das Produkt hat nach hydrolytischer Abspaltung des Methylisobutylketons einen Gehalt an basischem Stickstoff von 3,3%. Davon entfallen auf primären Stickstoff 0,7%, auf sekundären Stickstoff 2,4% und auf tertiären Stickstoff 0,2%.

*Vergleichsbeispiel 1*

Dieses Beispiel entspricht Beispiel 1, doch wird an Stelle des Ketimins von Hexamethylendiamin das freie Amin selbst eingesetzt:

Zu 50 Teilen Hexamethylendiamin werden bei 80°C unter Kühlen eine Lösung aus 152 Teilen des im Beispiel 1 verwendeten Diglycidylethers, in 50 Teilen Xylol gelöst, zugetropft und die Temperatur durch Kühlen bei 80°C gehalten. Das Produkt wird zunehmend viskoser, und nach ca. 80% der beabsichtigten Menge des Zulaufs geliert der Ansatz.

*Beispiel 2*

208,9 Teile eines Diglycidylethers aus Bis-(4-hydroxyphenyl)-2,2-propan und Epichlorhydrin mit einem Äquivalentgewicht von 485 und 54,3 Teile eines analogen Diglycidylethers mit einem Äquivalentgewicht von 190 werden zusammen mit 60 Teilen Toluol zum Rückfluss erhitzt, um vorhandene Wasserspuren zu entfernen. Anschliessend werden 210,9 Teile der Komponente B2 und 22,5 Teile Diethanolamin zugegeben und auf 120°C erhitzt. Nach 5 Stunden ist kein Epoxid mehr nachweisbar. Es wird mit 11,8 Teilen Butylglykol und 50 Teilen Isobutanol verdünnt. Das Produkt hat einen Festgehalt von 70%. Dies entspricht einem Festgehalt nach hydrolytischer Abspaltung des Methylisobutylketon von 60%.

*Beispiel 3*

258,7 Teile eines Diglycidylethers aus Bis-(4-hydroxyphenyl)-2,2-propan und Epichlorhydrin mit einem Äquivalentgewicht von 485 werden in 65 Teilen Toluol gelöst und die enthaltenen Wasserspuren durch Auskreisen entfernt. Es werden 214,4 Teile der Komponente B3 und 17,5 Teile Diethanolamin zugegeben und auf 120°C erhitzt. Nach 2 Stunden ist kein Epoxid mehr nachweisbar. Im Vakuum werden 83,5 Teile Lösemittel abdestilliert und durch 16 Teile Butylglykol und 120,5 Teile Isobutanol ersetzt. Das Produkt hat einen Festgehalt von 70%, dies entspricht 57,2% nach hydrolytischer Abspaltung von Methylisobutylketon.

*Beispiel 4*

214,3 Teile eines Diglycidylethers aus Bis-(4-hydroxyphenyl)-2,2-propan und Epichlorhydrin mit einem Äquivalentgewicht von 189, 48 Teile Bis-(4-hydroxyphenyl)-2,2-propan, 210,9 Teile der Komponente B3, 3,22 Teile Methylethanolamin und 18 Teile Diethanolamin werden vermischt, 90 Minuten bei 85°C und anschliessend 90 Minuten bei 100°C gehalten. Danach wird mit 14,3 Teilen Butylglykol und 107 Teilen Isobutanol auf einen Festgehalt von 70% verdünnt. Dies entspricht einem Festgehalt nach hydrolytischer Abspaltung von Methylisobutylketon von 60%.

III. Einsatz der erfindungsgemässen Kunstharze in hitzehärtbaren Überzugsmitteln, insbesondere in kathodischen Elektrotauchlacken

Um bei erhöhter Temperatur vernetzen zu können, müssen den stickstoffbasische Gruppen tragenden Kunstharzen Vernetzer zugemischt werden, mit denen sie bei Raumtemperatur stabile Mischungen bilden und beim Erhitzen vernetzen.

Vernetzer 1:

Gemäss der DE-OS 2 701 002, Beispiel 1, wird ein geblockter Isocyanatvernetzer (Polyurethanvernetzer) hergestellt, indem 218 Teile 2-Ethylhexanol langsam zu 291 Teilen einer 80/20-Isomermischung von 2,4/2,6-Toluylendiisocyanat unter Rühren und in einer Stickstoffatmosphäre gegeben werden, wobei die Reaktionstemperatur durch äussere Kühlung unter 38°C gehalten wird. Der Ansatz wird noch eine weitere halbe Stunde bei 38°C gehalten und dann auf 60°C erwärmt, wonach 75 Teile Trimethylolpropan und anschliessend 0,08 Teile Dibutylzinndilaurat als Katalysator zugegeben werden. Nach einer exothermen Reaktion zu Beginn wird der Ansatz 1,5 Stunden bei 121°C gehalten, bis im wesentlichen die gesamten Isocyanatgruppen verbraucht sind, was an dem Infrarotspektrum zu erkennen ist. Der Ansatz wird dann mit 249 Teilen Ethylenglykolmonoethylether verdünnt.

Vernetzer 2:

Gemäss der EP 0 040 867 Beispiel 2d) wird ein Polyestervernetzer hergestellt: 192 Teile Trimellitsäureanhydrid und 500 Teile Versaticsäureglycidylester, mit einem Epoxidäquivalentgewicht von 250, werden vermischt und unter Rühren auf 100°C erwärmt. Es tritt eine exotherme Reaktion auf, und die Temperatur steigt auf 190°C. Nach Abkühlen auf 140°C werden 2 Teile Benzyldimethylamin zugegeben. Die Mischung wird 3 Stunden bei 140°C gehalten. Es entsteht ein viskoses, klares Produkt.

Vernetzer 3:

Ein als Vernetzer geeignetes Harnstoffkondensationsprodukt wird folgendermassen hergestellt:

58 Teile Hexamethylendiamin, 60,1 Teile 3,3-Dimethyl-4,4-diaminodicyclohexylmethan und 90 Teile Harnstoff werden innerhalb von 2 Stunden auf 160°C erhitzt. Dabei spaltet sich ab etwa 120°C Ammoniak ab. Die Reaktionsmischung wird zuerst flüssig und erstarrt dann zu einer weissen Kristallmasse. Die Temperatur wird erhöht, bis bei 180°C eine klare Schmelze entsteht. Bei dieser Temperatur werden innerhalb von 8 Stunden 193,5 Teile Dibutylamin zugegeben. Nach beendeter Zugabe wird so lange bei 180°C bis 190°C gehalten, bis der Rückfluss zum Erliegen kommt, wozu etwa 4 Stunden benötigt werden. Nach dem Abkühlen erstarrt das Harnstoffkondensationsprodukt zu einer farblosen, glasartigen Masse mit einem Erweichungspunkt von etwa 100°C.

*Beispiel 5*

Zu 117 Teilen des Kunstharzes gemäss Beispiel 2 werden 42,6 Teile des Vernetzers 1, 2 Teile Dibutylzinndilaurat und 2,3 Teile Essigsäure gegeben.

*Beispiel 6*

Zu 125 Teilen des Kunstharzes gemäss Beispiel 3 werden 42,6 Teile des Vernetzers 3 zugegeben und verrührt. Nach Zugabe von 2,5 Teilen Essigsäure wird das Produkt wasserverdünnbar.

*Beispiel 7*

125 Teile des Kunstharzes gemäss Beispiel 3, 30 Teile des Vernetzers 2, 3 Teile Bleioctoat (24% Pb) und 2,5 Teile Essigsäure werden bei Raumtemperatur vermischt.

*Beispiel 8*

Zu 116 Teilen des Kunstharzes gemäss Beispiel 4 werden 42,6 Teile des Vernetzers 3 zugegeben und verrührt. Danach werden 24 Teile einer 10%igen wässrigen Essigsäurelösung zugegeben.

IV. Prüfung der Bindemittel

Zur Prüfung als kationische Elektrotauchlacke werden durch Zugabe von Wasser aus den mit Säure versetzten Bindemitteln 10%ige Dispersionen hergestellt. Unter Rühren werden zu jeweils 1000 Teilen der jeweiligen Bindemitteldispersion 66 Teile einer Pigmentpaste zugesetzt, welche folgendermassen hergestellt wird:

*Pigmentpaste*

Nach Beispiel 1a) der DE-OS 3 121 765 wird ein Pastenbindemittel hergestellt. Dazu werden in einem Reaktionsgefäss 200 Teile Ethylenglykolmonobutylether auf 90°C erwärmt. Dann wird binnen 2 Stunden eine Mischung aus 396 Teilen N-Vinylpyrrolidon, 204 Teilen Vinylpropionat und 1,2 Teilen Azobisisobutyronitril zugetropft. Abschliessend wird 1 Stunde lang bei 90°C nachpolymerisiert. Das resultierende Lösungspolymerisat hat ein K-Wert nach Fikentscher von 24. Der Festkörpergehalt der Copolymerisatlösung beträgt 76%.

In einer Rührwerksmühle werden 250 Teile der obigen Copolymerisatlösung, 210 Teile Ethylenglykolmonobutylether, 555 Teile Ethylenglykolmonoethylether, 837 Teile Wasser, 1084 Teile Kaolin, 217 Teile basisches Bleisilikat, 145 Teile Russ, 36 Teile Rutil und 3000 Teile Glasperlen von einem Durchmesser von 2 mm 45 Minuten bei einer Drehzahl von 1000 Umdrehungen/Minute gerührt. Nach dem Abtrennen der Glasperlen wird eine Schwarzpaste mit einem Festgehalt von 50,6% erhalten.

Die Bäder werden 48 Stunden bei 30°C gerührt. An kathodisch geschalteten, zinkphosphatierten Prüftafeln aus Stahl werden Lackfilme innerhalb von 2 Minuten bei der angegebenen Spannung abgeschieden und 20 Minuten bei 180°C, bzw. 160°C eingebrannt. Anschliessend wird die Beständigkeit gegen Aceton durch 50maliges Hin- und Herreiben mit einem acetongetränkten Wattebausch, die Elastizität in Form der Schlagtiefe und die Beständigkeit gegen Salzsprühnebel geprüft. Die folgende Tabelle zeigt die Ergebnisse:

| Lack gemäss | pH | Umgriff nach Ford (Spannung) | Acetonfestigkeit (Einbrenn-temperatur) | Schlag-tiefe [in × 1b] | 500 Stunden Salz-sprühnebelbelastung nach ASTM (Unter-wanderung am Ritz) |
|---|---|---|---|---|---|
| Beispiel 5 | 7,4 | 20 cm (300 V) | 1 (180°C) | 160 | 1 mm |
| Beispiel 6 | 7,2 | 22 cm (290 V) | 1 (160°C) | 160 | 0,5-1 mm |
| Beispiel 7 | 7,0 | 21 cm (320 V) | 2 (180°C) | 160 | 1 mm |
| Beispiel 8 | 7,5 | 22 cm (300 V) | 1 (160°C) | 160 | 0,5 mm |

Acetonfestigkeit: 1 = sehr gut
6 = ungenügend

**Patentansprüche**

1. Stickstoffbasische Gruppen tragendes, durch Protonierung mit Säure wasserverdünnbares Kunstharz, dadurch gekennzeichnet, dass es durch Reaktion von

(A) mindestens einem Epoxidharz mit einem mittleren Molekulargewicht $\overline{M}_n$ von 300 bis 6000 und im Mittel 1,5 bis 3,0 Epoxidgruppen pro Molekül mit

(B) einem Diketimin eines diprimären Amins und gegebenenfalls

(C) einem sekundären Amin, das gegebenenfalls zusätzlich eine tertiäre Aminogruppe enthält, einem Ketimin eines primären Monoamins und/oder einem Ketimin eines primär/tertiären Diamins erhältlich ist.

2. Stickstoffbasische Gruppen tragendes, durch Protonierung mit Säure wasserverdünnbares Kunstharz nach Anspruch 1, dadurch gekennzeichnet, dass die Hydroxylgruppen des Reaktionsprodukts aus (A), (B) und gegebenenfalls (C) zumindest teilweise mit teilblockiertem Polyisocyanat zu Urethangruppen umgesetzt sind.

3. Kunstharz nach Anspruch 1 oder 2, dadurch gekennzeichnet, dass die Anzahl der eingesetzten Epoxid-Äquivalente des Epoxidharzes (A) 50 bis 100% der Summe der eingesetzten Ketimin- und sekundären Amin-Äquivalente der Komponenten (B) und (C) ist.

4. Kunstharz nach einem der vorhergehenden Ansprüche, dadurch gekennzeichnet, dass als Epoxidharz (A) ein Glycidylether eines im Mittel mindestens zwei phenolische Hydroxylgruppen pro Molekül enthaltenden Polyphenols, der ein mitttleres Molekulargewicht $\overline{M}_n$ zwischen 350 und 5000 aufweist, verwendet wird.

5. Kunstharz nach einem der vorhergehenden Ansprüche, dadurch gekennzeichnet, dass als Komponente (B) ein Diketimin aus zwei Mol Methylisobutylketon und einem Mol Diamin verwendet wird.

6. Kunstharz nach einem der vorhergehenden Ansprüche, dadurch gekennzeichnet, dass als Komponente (B) ein Diketimin aus einem Diamin mit einem mittleren Molekulargewicht bis 3000 verwendet wird.

7. Kunstharz nach einem der Ansprüche 1 bis 5, dadurch gekennzeichnet, dass als Komponente (B) ein Diketimin aus einem der aliphatischen Diamine 1,4-Diaminobutan, 1,6-Diaminohexan, 4,9-Dioxadodecandiamin-1,12; 4,4'-Diamino-dicyclohexylmethan oder 2-(3-Aminopropyl)-cyclohexylamin verwendet wird.

8. Verwendung des durch Protonierung mit Säure wasserverdünnbaren Kunstharzes, gemäss einem der vorhergehenden Ansprüche in Form einer wässrigen Dispersion, die gegebenenfalls zusätzlich Vernetzer organische Lösemittel, Pigmente und/oder weitere Hilfsstoffe enthält, als Überzugsmittel.

9. Verwendung nach Anspruch 8 für die kathodische Elektrotauchlackierung elektrisch leitfähiger Substrate.

10. Überzugsmittel, dadurch gekennzeichnet, dass es als Bindemittel ein stickstoffbasische Gruppen tragendes, durch Protonierung mit Säure wasserverdünnbares Kunstharz nach einem der Ansprüche 1 bis 7 und zusätzlich einen Vernetzer enthält.

11. Überzugsmittel nach Anspruch 10, dadurch gekennzeichnet, dass der Vernetzer ein Aminoplast- und/oder Phenolplastharz ist.

12. Überzugsmittel nach Anspruch 10, dadurch gekennzeichnet, dass der Vernetzer ein geblocktes mehrwertiges Isocyanat ist.

13. Überzugsmittel nach Anspruch 10, dadurch gekennzeichnet, dass der Vernetzer eine zur Esteraminolyse und/oder Umesterung befähigte Verbindung mit im Mittel mindestens zwei aktivierten Estergruppen pro Molekül ist.

14. Überzugsmittel nach Anspruch 10, dadurch gekennzeichnet, dass der Vernetzer ein Harnstoffkondensationsprodukt ist, das durch Umsetzung eines primären Di- und/oder Polyamins mit Harnstoff und einem sekundären Monoamin, gegebenenfalls unter Mitverwendung eines Polyalkohols bei erhöhter Temperatur unter Abtrennung des entstehenden Ammoniaks erhalten worden ist.

15. Verfahren zur Herstellung von Überzügen durch kathodische Elektrotauchlakierung aus einem Elektrotauchbad, dadurch gekennzeichnet, dass das Elektrotauchbad ein mit Säure protoniertes gemäss einem der Ansprüche 1 bis 7 hergestelltes Kunstharz oder ein Überzugsmittel gemäss einem der Ansprüche 10 bis 14 sowie gegebenenfalls zusätzlich Pigmente, organische Lösungsmittel und/oder weitere Hilfsstoffe enthält.

16. Mit einem Lacküberzug versehener Gegenstand, dadurch gekennzeichnet, dass er mit einem Überzug versehen ist, der durch Aufbringen eines nach Anspruch 8 verwendeten Kunstharzes oder eines Überzugsmittels nach einem der Ansprüche 10 bis 14 und Einbrennen erhalten worden ist.

## Claims

1. A synthetic resin which carries basic nitrogen groups and can be diluted with water as a result of protonation with an acid, characterized in that it is obtainable by reacting

(A) one or more epoxy resins having a mean molecular weight $\overline{M}_n$ of from 300 to 6,000 and containing on average from 1.5 to 3.0 epoxide groups per molecule, with

(B) a diketimine of a primary diamine and, if desired,

(C) a secondary amine which may additionally contain a tertiary amino group; a ketimine of a primary monoamine; or a ketimine of a primary/tertiary diamine.

2. A synthetic resin which carries basic nitrogen groups and can be diluted with water as a result of protonation with an acid, as claimed in claim 1, characterized in that some or all of the hydroxyl groups of the product of (A) and (B) with or without (C) have been reacted with partially blocked polyisocyanate to give urethane groups.

3. A synthetic resin as claimed in claim 1 or 2, characterized in that the number of epoxide equivalents of epoxy resin (A) employed is from 50 to 100%, based on the sum of the number of equivalents of ketimine and secondary amine of components (B) and (C) employed.

4. A synthetic resin as claimed in any of the preceding claims, characterized in that the epoxy resin (A) used is a glycidyl ether of a polyphenol which contains on average two or more phenolic hydroxyl groups per molecule and has a mean molecular weight $\overline{M}_n$ of from 350 to 5,000.

5. A synthetic resin as claimed in any of the preceding claims, characterized in that the component (B) used is a diketimine obtained from two moles of methyl isobutyl ketone and one mole of a diamine.

6. A synthetic resin as claimed in any of the preceding claims, characterized in that the component (B) used is a diketimine obtained from a diamine having a mean molekular weight of up to 3,000.

7. A synthetic resin as claimed in any of claims 1 to 5, characterized in that the component (B) used is a diketimine obtained from one of the aliphatic diamines 1,4-diaminobutane, 1,6-diaminohexane, 4,9-dioxadodecane-1,12-diamine, 4,4'-diaminodicyclo-hexylmethane and 2-(3-aminopropyl)-cyclohexylamine.

8. The use of a synthetic resin which can be diluted with water as a result of protonation with an acid, as claimed in any of the preceding claims, in the form of an aqueous dispersion which may additionally contain crosslinking agents, organic solvents, pigments and/or other assistants, as a coating material.

9. The use as claimed in claim 8 for the cathodic electrocoating of electrically conductive substrates.

10. A coating material characterized in that it contains, as binder, a synthetic resin as claimed in any of claims 1 to 7, which carries basic nitrogen groups and can be diluted with water as a result of protonation with an acid, and additionally contains a crosslinking agent.

11. A coating material as claimed in claim 10, characterized in that the crosslinking agent is an amino resin or a phenoplast resin.

12. A coating material as claimed in claim 10, characterized in that the crosslinking agent is a blocked polyvalent isocyanate.

13. A coating material as claimed in claim 10, characterized in that the crosslinking agent is a compound which is capable of ester aminolysis or transesterification and contains on average two or more activated ester groups per molecule.

14. A coating material as claimed in claim 10, characterized in that the crosslinking agent is a urea condensate which has been obtained by reacting a primary diamine and/or polyamine with urea and a secondary monoamine in the presence or absence of a polyalcohol at elevated temperature, with removal of the ammonia formed.

15. A process for the production of coatings by cathodic electrocoating from an electrocoating bath, characterized in that the electrocoating bath contains a synthetic resin protonated with an acid and prepared as described in any of claims 1 to 7, or a coating material as claimed in any of claims 10 to 14, and may additionally contain pigments, organic solvents and/or other assistants.

16. An article provided with a coating, characterized in that it is provided with a coating which has been obtained by applying a synthetic resin used as described in claim 8, or a coating material as claimed in any of claims 10 to 14, and then carrying out baking.

**Revendications**

1. Résine synthétique à groupes azotés basiques, devenant diluable dans l'eau par une protonation par un acide, caractérisée en ce qu'elle est obtenue par la réaction de

(A) au moins une résine époxyde comprenant, en moyenne, entre 1,5 et 3,0 groupes époxyde dans sa molécule et possédant un poids moléculaire moyen $\overline{M}_n$ entre 300 et 6000 avec

(B) un dicét-imine d'une amine diprimaire et éventuellement

(C) une amine secondaire, pouvant éventuellement contenir un groupe amino tertiaire, une cétimine d'une mono-amine primaire et(ou) une cétimine d'une diamine primaire/tertiaire.

2. Résine synthétique à groupes azotés basiques, devenant diluable dans l'eau par une protonation par un acide, suivant la revendication 1, caractérisée en ce que les groupes hydroxyle du produit de la réaction de (A), de (B) et de (C) éventuel sont transformés au moins partiellement en groupes uréthanne par du polyisocyanate partiellement bloqué.

3. Résine synthétique suivant la revendication 1 ou la revendication 2, caractérisée en ce que la proportion des équivalents époxy de la résine époxyde (A), mis en œuvre, est comprise entre 50 et 100% de la somme des équivalents cétimine et amine secondaire des composants (B) et (C).

4. Résine synthétique suivant l'une des revendications précédentes, caractérisée en ce que la résine époxyde (A) est choisie parmi les éthers glycidyliques d'un polyphénol, dont la molécule comprend en moyenne au moins deux groupes hydroxyle phénoliques et dont le poids moléculaire moyen $\overline{M}_n$ se situe entre 350 et 5000.

5. Résine synthétique suivant l'une des revendications précédentes, caractérisée en ce que le composant (B) est une dicét-imine obtenue à partir de deux moles de méthyl-isobutyl-cétone et d'une mole d'une diamine.

6. Résine synthétique suivant l'une des revendications précédentes, caractérisée en ce que le composant (B) est une dicét-imine dérivée d'une diamine d'un poids moléculaire moyen inférieur ou égal à 3000.

7. Résine synthétique suivant l'une des revendications 1 à 5, caractérisée en ce que le composant (B) est une dicét-imine choisie parmi les diamines aliphatiques diamino-1,4 butane, diamino-1,6 hexane, dioxa-4,9 dodécane diamine-1,12, diamino-4,4' dicyclohexyl méthane et (amino-propyl-3)-2 cyclohexyl-amine.

8. Utilisation d'une résine synthétique suivant l'une des revendications précédentes, diluable par l'eau par protonation par un acide, sous la forme d'une dispersion aqueuse, pouvant en outre contenir des agents mouillants ou réticulants, des solvants organiques, des pigments et(ou) d'autres additifs éventuels, en tant que produit d'enduction ou de revêtement.

9. Utilisation suivant la revendication 8 pour le vernissage par électrolyse cathodique de substrats (ou subjectiles) conducteurs de l'électricité.

10. Composition d'enduction ou de revêtement, caractérisée en ce qu'elle contient comme liant une résine synthétique à groupes azotés basiques, devenant diluable dans l'eau par une protonation par un acide, suivant l'une des revendications 1 à 7, ainsi qu'un agent réticulant.

11. Composition d'enduction ou de revêtement suivant la revendication 10, caractérisée en ce que l'agent réticulant est une résine amino-plaste ou phéno-plaste.

12. Composition d'enduction ou de revêtement suivant la revendication 10, caractérisée en ce que l'agent réticulant est un isocyanate polyvalent bloqué.

13. Composition d'enduction ou de revêtement suivant la revendication 10, caractérisée en ce que l'agent réticulant est choisi parmi les composés, dont la molécule contient en moyenne au moins deux groupes ester activés, capables de provoquer une aminolyse de l'ester et(ou) une transestérification.

14. Composition d'enduction ou de revêtement suivant la revendication 10, caractérisée en ce que l'agent réticulant est choisi parmi les produits de la condensation d'une urée, obtenus par la réaction de l'urée avec une di- et(ou) une poly-amine primaire et une mono-amine secondaire à température accrue, éventuellement en présence d'un poly-alcool et avec élimination concomitante de l'ammoniac formé.

15. Procédé de réalisation d'un enduit ou revêtement par électrolyse cathodique en immersion, caractérisée en ce que le bain d'électrolyse contient une résine synthétique protonée par un acide suivant l'une des revendications 1 à 7 ou une composition d'enduction ou de revêtement suivant l'une des revendications 10 à 14, ainsi que des pigments, solvants organique et(ou) d'autres additifs supplémentaires.

16. Article pourvu d'un vernis superficiel, caractérisée en ce que le revêtement ou vernis a été réalisé à l'aide d'une résine synthétique suivant la revendication 8 ou d'une composition d'enduction suivant l'une des revendications 10 à 14, le dépôt de celle-ci ayant été suivi d'une opération de cuisson.